# EUROPEAN PATENT SPECIFICATION

(11) **EP 1 346 596 B1**
(45) Date of publication and mention of the grant of the patent: **20.01.2010**
(21) Application number: 01975126.2
(22) Date of filing: 09.10.2001
(51) Int. Cl.: H04W 8/20

(54) **METHODS AND ARRANGEMENT FOR DISTRIBUTION OF PARAMETER SETS TO A USER EQUIPMENT IN CELLULAR MOBILE COMMUNICATION NETWORKS**
VERFAHREN UND ANORDNUNG ZUR VERTEILUNG VON PARAMETERMENGEN AN BENUTZERGERÄTE IN ZELLULAREN MOBILKOMMUNIKATIONSNETZEN
PROCEDES ET DISPOSITION PERMETTANT LA DISTRIBUTION D'ENSEMBLES DE PARAMETRES A UN EQUIPEMENT D'UTILISATEUR DANS DES RESEAUX DE COMMUNICATION MOBILE CELLULAIRE

(30) Priority: 29.12.2000 SE 0004914
(43) Date of publication of application: 24.09.2003
(73) Proprietor: TELEFONAKTIEBOLAGET LM ERICSSON (publ), 164 83 Stockholm (SE)
(72) Inventor: JOHANSSON, Staffan, S-974 55 Luleå (SE); JÖNSSON, Erik, S-974 51 Luleå (SE)
(74) Representative: Forsberg, Ulrika S.
(86) International application number: PCT/SE2001/002201
(87) International publication number: WO 2002/054818

(56) References cited:
- WO-A1-00/70897
- WO-A1-94/10774
- WO-A2-98/41044
- US-A- 6 047 071
- US-A- 6 148 204

## Description

### FIELD OF THE INVENTION

The present invention relates to methods and arrangements in cellular mobile communication networks, in particular to methods for distribution of parameter sets, e.g. for defining a radio bearer service, to a user equipment in said network.

### BACKGROUND OF THE INVENTION

Communication networks must comply with various demands. On the one hand networks must be robust, simple and low-cost; on the other hand, however, there are high demands on network performance, which is measured, e.g., by means of various network characteristics. One important group of such characteristic parameters are the various kinds of delays that occur either in the communication between network units or between network units and user equipments that use services of said network. These delays are caused due to the necessary exchange of signalling, control, or configuration data in the network, e.g. delays in connection with call setups, channel switching, or hand-over. US patent 6,047,071 describes such an exchange of signalling and configuration data between a base station and a mobile station , wherein a base station sends a message to the mobile station to check whether it supports OTASP (Over-The-Air Service Provisioning). If this is the case, the mobile station returns a message indicating OTASP support, whereafter a check of whether the connection may be encrypted is performed. In case this is possible the mobile station may be configured by the base station, i.e. activated and various other parameters may be signaled to the mobile station without any intervention from the user, such as roaming information, preferred mode of operation and others. In 3^{rd} generation systems, such information is transmitted by means of RRC (Radio Resource Control) connections, which are point-to-point bidirectional connections between RRC peer entities in the user equipments and the appropriate sides in the radio access network. This is recited in the document "RRC Protocol Specification" (3G TS 25.331, version 3.1.0) by the 3^{rd} Generation Partnership Project.

From said document it becomes apparent that in order to establish a radio bearer configuration a considerably large set of parameter data must be transmitted to the user equipment by means of so called RRC-messages that are transmitted via the above mentioned RRC-connection. A large amount of data must also be sent along with the message transfer when using one of the network services, e.g. a voice or video call. Depending on the configuration these messages have variable length. These messages are segmented and transferred in a number N of transport blocks that are each sent within a transport time interval. Typically, the length t of these time intervals is selected from a range between 10 and 40 ms. Due to, e.g., bad radio conditions it is probably necessary to re-transmit a certain share α of said message blocks, whereof α is from a range 0 to 0.4. Thus, the total time it takes to transmit a RRC-message consisting of N blocks can be calculated as (1+α)Nt. It is considered to be a drawback of the communication protocol as described in said "RRC Protocol Specification" that large amounts of data must be sent along with all messages that are part of a service that the user equipment applies in said network thus causing an unduly high amount of overload and time delays.

### SUMMARY OF THE INVENTION

It has been observed to be a problem that the transmission of data, e.g. radio bearer configuration data, between a unit in a communication network and a user equipment using services of said network can cause inappropriate time delays and an increased network load.

It is thus an object of the present invention to achieve a method that allows a reduction of the amount of data that must be transmitted from said network units to said user equipments.

This is advantageously solved by the teaching of claims 1 and 9.

It is a further object of the present invention to achieve an arrangement in a user equipment and a network unit that can be applied for the methods according to claims 1-7 and 9-11.

This is advantageously solved by the teaching of claims 8 and 12.

Briefly, these and other objects of the present invention are accomplished by the inventive method that divides a set of parameterised data, e.g. containing configuration parameters, into subsets of data such that it is sufficient to transmit one of said subsets to the user equipment in conjunction with an event that involves a change or update of at least one parameter of said subset in the user equipment. The subsets of parameters can be composed, e.g., with respect to properties of the network, its provided services and calls that apply said services. The parameterised data can be transmitted in form of, e.g., standardised data sets via the cell broadcast channel or via the RRC-connection on demand of a user equipment.

As a first advantage, the present invention provides an improved download of, e.g., configuration data that minimises the time delays in connection with call setups by means of sending configuration data only at certain events.

Another advantage of the present invention is an improved download of, e.g., configuration data that minimises the network load in connection with call setups due to a minimisation of the amount of data that need to be transmitted to the user equipment.

Other objects, advantages and novel features of the invention will become apparent from the following detailed description of the invention when considered in conjunction with the accompanying drawings and claims.

### BRIEF DESCRIPTION OF THE DRAWINGS

For a better understanding, reference is made to the following drawings and preferred embodiments of the invention.
Figure 1 shows an example for the establishment of an RRC Connection.
Figure 2 shows a part of a cellular communication network within which the method according to the present invention is performed.
Figure 3a shows a flowchart that describe the initial method steps according to the present invention in a user equipment that are performed when the user equipment turns on.
Figure 3b shows a flowchart that describe the method steps according to the present invention in a user equipment when performing a call setup.

### DETAILED DESCRIPTION

The present invention is intended to be applied in communication networks consisting of a plurality of interconnected network nodes and user equipments using services of said network. The invention refers in its broadest sense to a method for transferring various kinds of parameterised data sets, e.g. for control, signalling, or configuration purposes, which must be distributed from a network unit to a user equipment that intends to use a service of said network or between arbitrary network units. In general terms, the method according to the present invention contributes to a reduction of time delays and data load in said network by means of reducing the amount of such parameterised data that is transferred between such units.

It is a first aspect that said reduction is done by means of determining appropriate events in conjunction with which said data subsets must be updated. This implies, in other words, that such events can be characterised by the necessity to transfer a specific subset of data. With respect to the composition of such a subset one must bear in mind that the efficiency is the better the longer the parameters of such subsets remain valid. Said events and the groups of parameters that are affected by said events are described later on in more detail.

It is another aspect that a further reduction of the above mentioned time delays and data load in the network can be achieved depending on the way in which the data is transmitted to a receiving unit. It is one possibility to transmit such data via an RRC-connection to the user equipment. However, especially with regard to data, which normally remains constant for a longer time period, it is another possibility to broadcast such data, e.g. in form of standardised sets, over the entire cell area such that each user equipment can retrieve and update such data if necessary.

This general approach will now be explained in more detail by means of an example that relates to the transmission of configuration data for defining a radio bearer service in a radio access network.

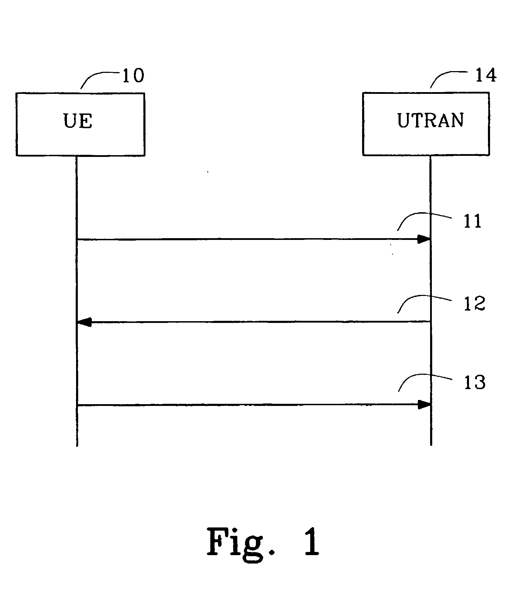

Figure 1 shows an example for the establishment of an RRC Connection. The radio access network, e.g. the Universal Terrestrial Radio Access network (UTRAN), can provide a number of radio access bearers which are defined by sets of configuration parameters in order to constitute a certain service, e.g. for voice or video communication or for packet data transmission. A user equipment 10 must at first establish an RRC-connection in order to be able to use such a service. This is done by means of sending via the Random Access Channel of the system a "RRC Connection Request"-message 11 to a network unit 14 in the UTRAN. If said request is accepted by the network said network unit will respond with a "RRC Connection Setup"-message 12 which contains a large number of various system and service related parameters that define an appropriate communication channel for said service. The establishment of the RRC-connection is completed when the user equipment sends an "RRC Connection Setup Complete"-message 13 to the network unit. According to the state of the art as described above the complete configuration data set must be sent each time when a user equipment intends to initiate a call setup using a specific service. This implies a high degree of flexibility on the one hand but insufficiently high time delays and network load on the other hand. In order to overcome these problems, e.g. when regarding the distribution of configuration data to user equipments or other units in the network the present invention focuses on the choice of appropriate events when certain subsets of data that relate to this event shall be transmitted.

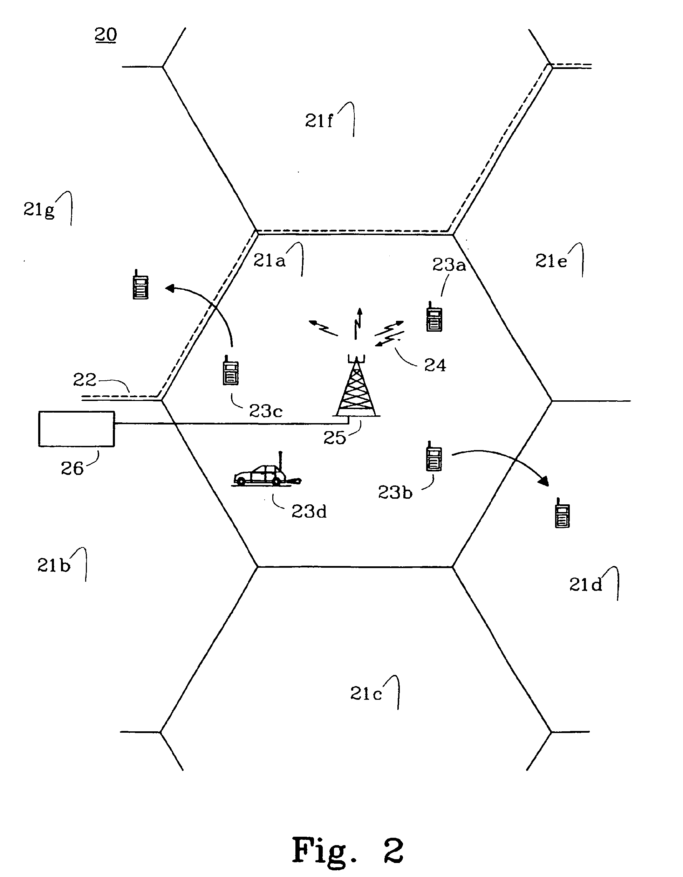

It is one principal idea of the present invention to divide the complete configuration data set for a radio access bearer that is necessary to perform a service in the communication network into separate subsets of configuration data whereof each of said sets contains data that only changes in conjunction with specific events and, thus, only need to be transmitted to the user equipment in case of such events. The parameters that constitute the configuration data sets can be classified into a number of subgroups. Three of these subgroups will now be explained with reference to figure 2:

A first subgroup contains data that refer to parameters of the cellular communication network 20. Examples for such parameters are general network parameters, that a user equipment must be aware of. Another example is the identity of the cell 21a and location area 22 in which the user equipments 23a-23d are located. Still another example refers to the corresponding identities or properties of neighboured cells 21b-21g.

Another subgroup contains data that describes properties of the various services that the communication system 20 can offer to user equipments 23a-23d in the surrounding cells 21a-21g. Examples for such parameters refer to various transmission or protocol related characteristics.

Finally, a third subgroup contains those parameters, e.g. scrambling codes or measurement identities, that are specific for a single call 24 from a user equipment 23a using one of said services of the communication network 20.

The following describes the events that have an impact on the above mentioned subgroups of parameters. Parameters of the first subgroup depend mainly on the position or roaming behaviour of the user equipment 23a-23d. Possible events are therefore, e.g., that a user equipment 23b performs a handover to a neighbour cell 21d or that a user equipment 23c passes a location area boundary 22 and moves to a cell 21g of a neighbouring location area. Depending on the different mobility of user equipments 23a,23d these parameters remain constant for a shorter or longer period of time. However, considering user equipments 23a with low velocity, e.g. pedestrians, it is likely that these parameters need not to be retransmitted each time such a user equipment 23a initiates a call setup.

Relevant events with regard to the second subgroup of parameters, which contain service related parameters, relate to changes of the various transmission or protocol characteristics when performing a service. An example for such an event is that a user equipment 23a intends to use a specific service for the first time. Then, it is necessary to retrieve via the radio base station 25 of the cell 21a a larger amount of data that is related to this service from an appropriate network unit 26. It is sufficient to retrieve these data subsets only once because normally this data does not change when the service is applied for the next time. However, one must bear in mind that changes of parameters in this subgroup may also be the result of the event that the user equipment 23a submits a specific demand to change one of these parameters, e.g. to reduce the transmission bit rate in order to increase its transmission range. Events that are caused by the roaming of a user equipment 23b,23c can also have an influence on the service related parameters depending on the fact to which degree a new cell 21d,21g or their neighbour cells support a service that the user equipment 23b,23c intends to use.

An example of a relevant event with regard to the third subgroup of parameters, which denotes call related parameters, is that a user equipment 23a intends to initiate a call setup.

Finally, when regarding the event that a user equipment 23a turns on it is apparent that it must retrieve relevant information at least concerning the first subgroup, i.e. parameters relating to the cellular communication network 20. Optionally, in case of this event it is also possible to retrieve service related information already at this stage instead of doing so when the user equipment 23a intends to use a specific service for the first time.

In a simplest case, a complete set of parameterised data, e.g. for a radio bearer configuration, can be roughly subdivided into a subset of semistatic data and a subset of dynamic data. The semistatic set contains preferably such data that remains constant for a longer period of time and normally does not change between two events, e.g. a handover or a call setup. Instead, this data rather changes only in conjunction with such events. The dynamic data set, however, contains data, which must be updated frequently or at least each time before, e.g., a call setup can be performed, irrespectively whether the service for which the dynamic data is used has already been applied in a previous call setup.

The benefit that can be achieved with respect to a reduction of time delays and network load for downloading of the configuration data depends mainly on the choice of parameters in these sets. The benefit will be the higher the larger the semistatic set can be composed and, correspondingly, the smaller the remaining dynamic set. However, one must bear in mind that a larger semistatic set also implies more risk that at least one of the contained parameters changes which implies that the set must be sent again. Another influence on the content in said sets results from the particular user. When regarding, e.g., the data set that must be sent to a user equipment in conjunction with a Radio Bearer Setup, the content of the semistatic set can be different for users that, e.g., only use certain services or have a low mobility. This implies that not each user must download the total configuration parameter set but only the parameter sets for those services that he has subscribed for and that he actually uses. The parameter sets can thus also be transmitted as standardised sets that are adapted to, e.g., the behaviour and demands of various groups of users. Advantageously, for further call setups a user equipment can refer to these standardised sets by means of a reference number which greatly decreases load and delay values.

The following will describe two alternatives in conjunction with which events and in which way the above mentioned subsets of configuration data must be sent to the user equipment:

In a first embodiment of the method according to the present invention the semistatic configuration data is sent as soon as the user equipment turns on, i.e. in connection with the transfer of various other configuration and signalling data that is necessary to establish a new user equipment in a cell of the communication network. Semistatic configuration data sets, which define various services that are applicable for a call, are thus already available in the user equipment previous to any call setup by the user equipment. The semistatic configuration data can be transmitted, e.g., by means of an appropriate signalling channel that is used to transmit other initial signalling data. Another option is to broadcast this information via the broadcast channel (BCCH) of the cell. This has the main advantage that the configuration data can be downloaded quite easily. Additionally, by means of such a point-to-multipoint transmission it is easy to change the content of the information and quickly forward the modified information to the user equipments. A transmission via the cell broadcast channel offers thus the possibility for the user equipment to check at regular times, or due to certain events, whether the semistatic data is still valid or whether, e.g., a flag indicates a change in the content of the semistatic set.

When sent in advance, the semistatic configuration data can preferably be transmitted in sets that are composed with respect to certain criterions. It would be possible to define, e.g., standard sets of semistatic configuration data defining a couple of basic services and extended sets of semistatic configuration data that also include other kinds of services. One possible criterion is to send only the configuration data of the most commonly used services in the network, e.g. for ordinary voice calls and simple packet-based services. As explained later, this criterion can be refined even more by means of determining which services a user equipment normally requests for or which services are included in the user subscription profile. Other criterions of the composition of such sets may result from a controlling influence of the network operator, e.g. in order to prevent the usage of certain services due to temporary capacity problems in the network, due to temporary maintenance problems or in order to perform a gradual implementation of new services in a network such that the configuration data for the new service is at first retrievable only in those cells that have the necessary capacity and equipment and then successively implemented and available also in other cells.

In a second embodiment of the method according to the present invention the semistatic configuration data for a service is downloaded when the user equipment for the first time initiates a call setup that uses this service. This data is then stored in the user equipment as long as it is turned on and can thus be used immediately when the user equipment intends to set up another call using the same service. By this means the initial download phase when the user equipment turns on is reduced; instead, minor delays occur previous to call setups applying for a service that have not been used before.

The preferred embodiment of the method according to the present invention will combine the features of the above described first and second embodiment such that certain semistatic configuration data sets are broadcasted as described for the first embodiment while other types of semistatic configuration data are transferred on demand, i.e. the user equipment intends to use a service that needs a certain type of configuration data as described in the second embodiment.

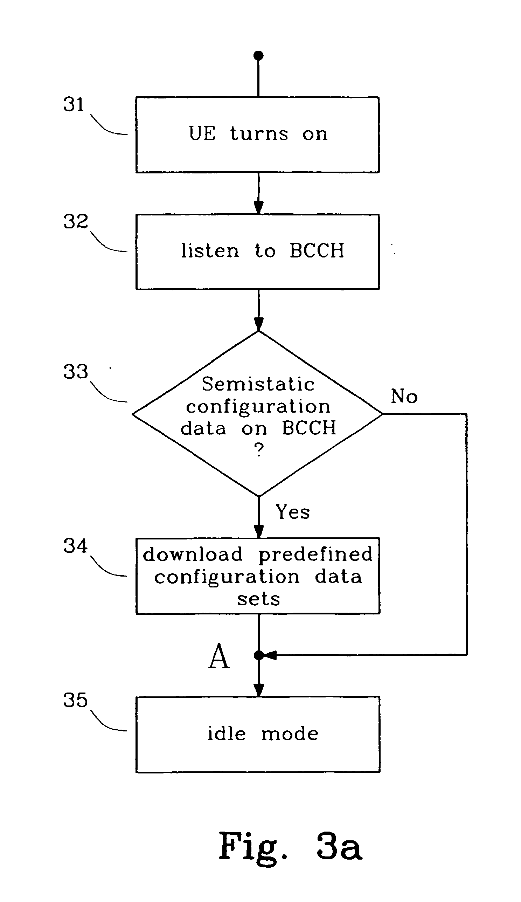

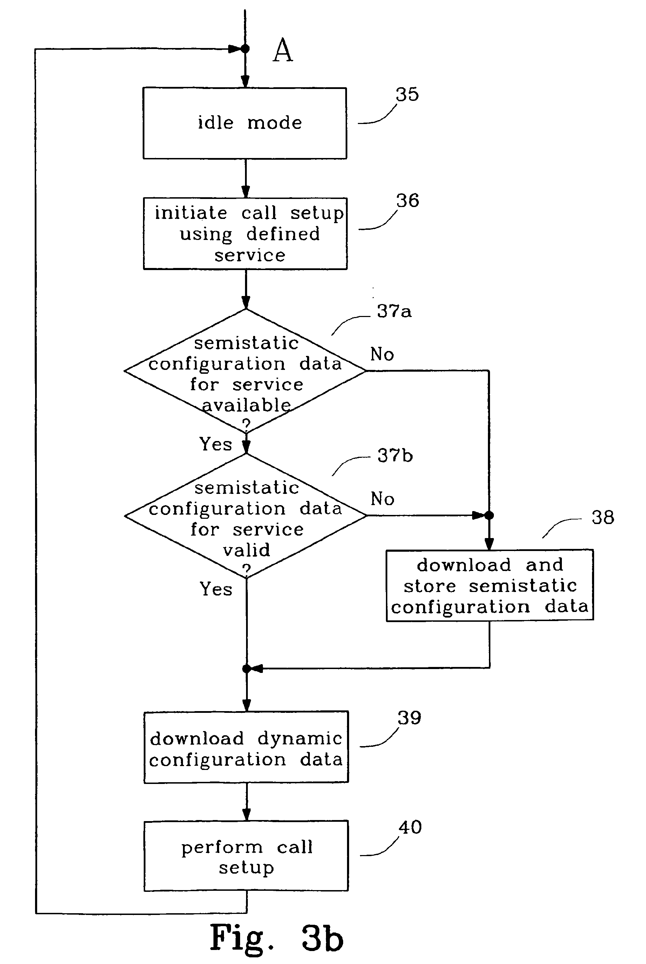

Figures 3a and 3b describe flowcharts that show the various steps according to the inventive method to allow a user equipment to perform a certain service that is offered by the network. Figure 3a describes method steps that are performed when a user equipment turns on while figure 3b describes method steps that are performed in connection with a call setup of the user equipment. In a first step, block 31, when the user equipment has turned on it must establish a RRC-connection to a radio base station in the network. This connection can be used, e.g., to exchange configuration and/or control data between user equipment and network. As it is one option according to the method of the present invention that semistatic configuration data sets are broadcasted via the broadcast channel of the cell to which the user equipment is connected, the user equipment will at first check said broadcast channel for semistatic configuration data, block 32. If such data is available, block 33Yes, the user equipment can download one or more predefined configuration data sets from the broadcast channel, block 34. Then, the user equipment can refer to this data, e.g. by means of a reference number, when initiating a call setup. Now, the user equipment is in the idle mode and ready to initiate call setups, block 35. If no semistatic configuration data is available on the cell broadcast channel, block 33No, the user equipment will also turn into the idle mode, block 35; however, the necessary semistatic configuration data must be sent later as explained in the following.

The user equipment remains in the idle mode, block 35, until it must perform a call setup, block 36. This will now be explained with reference to figure 3b. As already mentioned above, a call implies the use of a certain service and needs thus the corresponding configuration data set in order to configure the radio access bearer that shall be used for the communication connection. In a next step, block 37a, the user equipment must check whether the semistatic configuration data that is necessary to perform the call setup using said service is already available. This data is available to the user equipment, e.g., if it has downloaded the data from the broadcast channel, block 34, or if the user equipment previously has initiated a call setup using said service. However, normally the user equipment only downloads the configuration data that characterises the most common services. It might therefore be necessary to download additional semistatic configuration data, block 38, if the data for the requested service is not included, e.g., into one of the standardised sets that are retrieved from the broadcast channel or not stored from a previous call setup. Additionally, the user equipment must check whether the semistatic configuration data is still valid, block 37b. The method according to the present invention presumes that such semistatic configuration data does normally not change between two call setups and thus remains valid but, depending on the detailed composition of the semistatic set and the behaviour of the user equipment, the data must nevertheless be re-sent at certain events, e.g. after a cell change. In these cases the user equipment must retrieve the semistatic data. Otherwise, it is sufficient if the user equipment retrieves the dynamic configuration data, block 39, that must be sent to the user equipment in any case and which is comparatively small compared to the complete configuration data set. When the user equipment has retrieved the necessary data it can perform the call setup, block 40.

Another embodiment of the method according to the present invention as described above also considers the case that it is not possible to broadcast any configuration data in advance. Then, this data is downloaded via the random access channel each time a service is used for the first time and then temporarily stored in the user equipment such that this data is already available when the user equipment initiates a new call setup using this service and under the assumption that the semistatic configuration data is still valid. This information is temporarily stored in the user equipment until it turns off. Notwithstanding in which way the semistatic configuration data is retrieved it is necessary to retrieve the dynamic configuration data each time a call setup is initiated. Finally, when the user equipment has all necessary configuration data the requested call setup can be performed.

## Claims

1. Method in a user equipment of a cellular mobile communication network to receive sets of parameters from a network unit in said communication network, said parameter sets describing properties of the network, its provided services and calls that apply said services,
**characterised by**
dividing said parameter sets into subsets of data and requesting one of said subsets of data from the network unit at least in conjunction with an event that involves a change or update of at least one parameter of said subset in the user equipment, storing (38) the transmitted subset temporarily in the user equipment.

2. The method according to claim 1, whereby the fact that a user equipment turns on (31) constitutes an event as referred to in claim 1.

3. The method according to claim 1, whereby the fact that the user equipment performs a handover to another cell or location area constitutes an event as referred to in claim 1.

4. The method according to claim 1, whereby the fact that a user equipment intends to use a service for the first time constitutes an event as referred to in claim 1.

5. The method according to claim 1, whereby the fact that a user equipment intends to initiate a call setup (36) constitutes an event as referred to in claim 1.

6. The method according to one of claims 1-5, whereby selected subsets of parameters that relate to information on the cellular communication system or the services provided
in said system are transmitted in standardized sets to which the user equipment can refer by means of a reference number.

7. The method according to claim 6, whereby one or more of said standardized sets are received via the broadcast channel of the cells of the communication network.

8. A user equipment in a cellular mobile communication network intending to perform network services that require sets of parameters concerning properties of the network, its provided services and calls that apply said services,
**characterised in**
said user equipment is adapted for dividing said sets of parameters into subsets of data and wherein said user equipment further comprises means for requesting one of said subsets of data from the network unit at least in conjunction with an event that involves a change or update of at least one parameter of said subset in the user equipment, and storing means for temporarily storing (38) the received subsets in the user equipment.

9. Method in a network unit of a cellular mobile communication network to transmit sets of parameters to a user equipment in said communication network, said parameter sets describing properties of the network, its provided services and calls that apply said services, dividing the set of parameters into at least two subsets of parameters
**characterised by**
transmitting (34, 38) one of said subsets to said user equipment at least on request of the user equipment caused by an event that involves a change or update of at least one parameter of said subset in the user equipment.

10. The method according to claim 9, whereby selected subsets of parameters that relate to information on the
cellular communication network or the services provided in said network are transmitted in standardized sets and can be referred to by means of a reference number.

11. The method according to claim 10, whereby one or more of said standardised sets are transmitted via the broadcast channel of the cells of the communication network.

12. A network unit in a cellular mobile communication network comprising a set of parameters describing properties of the network, its provided services and calls that apply said services, storing means for storing said set of parameters in form of at least two subsets of parameters,
**characterised in**
means for transmitting (34, 38) one of said subsets to said user equipment at least on request of the user equipment caused by an event that involves a change or update of at least one parameter of said subset in the user equipment.

## Patentansprüche

1. Verfahren in einem Benutzergerät eines zellularen Mobilkommunikationsnetzes, um Parametermengen aus einer Netzeinheit im Kommunikationsnetz zu empfangen, wobei die Parametermengen Eigenschaften des Netzes, seine bereitgestellten Dienste und die Dienste anwendenden Anrufe beschreiben,
**gekennzeichnet durch**
Unterteilen der Parametermengen in Teilmengen von Daten und Anfordern von einer der Teilmengen von Daten aus der Netzeinheit mindestens in Verbindung mit einem Ereignis, das eine Änderung oder Aktualisierung von mindestens einem Parameter der Teilmenge im Benutzergerät einschließt, wobei die übertragene Teilmenge temporär im Benutzergerät gespeichert wird (3 8).

2. Verfahren nach Anspruch 1, wodurch die Tatsache, dass ein Benutzergerät eingeschaltet wird (31), ein wie in Anspruch 1 erwähntes Ereignis darstellt.

3. Verfahren nach Anspruch 1, wodurch die Tatsache, dass das Benutzergerät einen Handover an eine andere Zelle oder einen Standortbereich ausführt, ein wie in Anspruch 1 erwähntes Ereignis darstellt.

4. Verfahren nach Anspruch 1, wodurch die Tatsache, dass ein Benutzergerät einen Dienst zum ersten Mal zu benutzen beabsichtigt, ein wie in Anspruch 1 erwähntes Ereignis darstellt.

5. Verfahren nach Anspruch 1, wodurch die Tatsache, dass ein Benutzergerät einen Anrufaufbau (36) zu initiieren beabsichtigt, ein wie in Anspruch 1 erwähntes Ereignis darstellt.

6. Verfahren nach einem der Ansprüche 1-5, wodurch ausgewählte Teilmengen von Parametern, die Information auf dem zellularen Kommunikationssystem oder die im System bereitgestellten Dienste betreffen, in standardisierten Mengen übertragen werden, auf die sich das Benutzergerät mit Hilfe einer Referenznummer beziehen kann.

7. Verfahren nach Anspruch 6, wodurch eine oder mehrere der standardisierten Mengen über den Rundsendekanal der Zellen des Kommunikationsnetzes empfangen werden.

8. Benutzergerät in einem zellularen Mobilkommunikationsnetz, das Netzdienste auszuführen beabsichtigt, die Parametermengen erfordern, die Eigenschaften des Netzes, seine bereitgestellten Dienste und die Dienste anwendenden Anrufe betreffen,
**dadurch gekennzeichnet, dass**
das Benutzergerät dazu angepasst ist, die Parametermengen in Teilmengen von Daten aufzuteilen, und worin das Benutzergerät außerdem Mittel zum Anfordern von einer der Teilmengen von Daten aus der Netzeinheit mindestens in Verbindung mit einem Ereignis umfasst, das eine Änderung oder Aktualisierung von mindestens einem Parameter der Teilmenge im Benutzergerät einschließt, und Speichermittel zum temporären Speichern (38) der empfangenen Teilmengen im Benutzergerät umfasst.

9. Verfahren in einer Netzeinheit eines zellularen Mobilkommunikationsnetzes zum Übertragen von Parametermengen an ein Benutzergerät im Kommunikationsnetz, wobei die Parametermengen Eigenschaften des Netzes, seine bereitgestellten Dienste und die Dienste anwendenden Anrufe beschreiben, wobei die Parametermenge in mindestens zwei Teilmengen von Parametern unterteilt wird,
**gekennzeichnet durch**
Übertragen (34, 38) von einer der Teilmengen an das Benutzergerät mindestens auf Anforderung des Benutzergeräts, was **durch** ein Ereignis verursacht wird, das eine Änderung oder Aktualisierung von mindestens einem Parameter der Teilmenge im Benutzergerät einschließt.

10. Verfahren nach Anspruch 9, wodurch ausgewählte Teilmengen von Parametern, die Information auf dem zellularen Kommunikationsnetz oder die im Netz bereitgestellten Dienste betreffen, in standardisierten Mengen übertragen werden, wobei mit Hilfe einer Referenznummer auf sie Bezug genommen werden kann.

11. Verfahren nach Anspruch 10, wodurch einer oder mehrere der standardisierten Mengen über den Rundsendekanal der Zellen des Kommunikationsnetzes übertragen werden.

12. Netzeinheit in einem zellularen Mobilkommunikationsnetz, eine Parametermenge umfassend, die Eigenschaften des Netzes, seine bereitgestellten Dienste und die Dienste anwendenden Anrufe beschreiben, und Speichermittel zum Speichern der Parametermenge in Form von mindestens zwei Teilmengen von Parametern umfassend,
**gekennzeichnet durch**
Mittel zum Übertragen (34, 38) von einer der Teilmengen an das Benutzergerät mindestens auf Anforderung des Benutzergeräts, was **durch** ein Ereignis verursacht wird, das eine Änderung oder Aktualisierung von mindestens einem Parameter der Teilmenge im Benutzergerät einschließt.

## Revendications

1. Procédé utilisé dans un équipement utilisateur d'un réseau de communication mobile cellulaire pour recevoir des ensembles de paramètres en provenance d'une unité de réseau sur ledit réseau de communication, lesdits ensembles de paramètres décrivant les propriétés du réseau, ses services fournis et les appels qui appliquent lesdits services,
**caractérisé par** les étapes ci-dessous consistant à :
diviser lesdits ensembles de paramètres en sous-ensembles de données, et demander l'un desdits sous-ensembles des données de l'unité de réseau au moins conjointement avec un événement qui implique une modification ou une mise à jour d'au moins un paramètre dudit sous-ensemble dans l'équipement utilisateur,
stocker (38) temporairement le sous-ensemble transmis dans l'équipement utilisateur.

2. Procédé selon la revendication 1, par le biais duquel le fait qu'un équipement utilisateur se mette en service (31) constitue un événement selon la revendication 1.

3. Procédé selon la revendication 1, par le biais duquel le fait que l'équipement utilisateur mette en oeuvre un transfert intercellulaire vers une autre cellule ou zone de localisation constitue un événement selon la revendication 1.

4. Procédé selon la revendication 1, par le biais duquel le fait qu'un équipement utilisateur envisage d'utiliser un service pour la première fois constitue un événement selon la revendication 1.

5. Procédé selon la revendication 1, par le biais duquel le fait qu'un équipement utilisateur envisage d'initier un établissement d'appel (36) constitue un événement selon la revendication 1.

6. Procédé selon l'une des revendications 1 à 5, par le biais duquel des sous-ensembles de paramètres sélectionnés connexes à des informations sur le système de communication cellulaire ou connexes aux services fournis dans ledit système sont transmis sous la forme d'ensembles normalisés auxquels l'équipement utilisateur peut se référer au moyen d'un numéro de référence.

7. Procédé selon la revendication 6, par le biais duquel l'un ou plusieurs desdits ensembles normalisés est/sont reçu(s) via le canal de diffusion des cellules du réseau de communication.

8. Équipement utilisateur dans un réseau de communication mobile cellulaire envisageant de mettre en oeuvre des services de réseau qui exigent des ensembles de paramètres concernant des propriétés du réseau, ses services fournis et des appels qui appliquent lesdits services,
**caractérisé en ce que**
ledit équipement utilisateur est apte à diviser lesdits ensembles de paramètres en sous-ensembles de données et dans lequel ledit équipement utilisateur comprend en outre un moyen pour demander l'un desdits sous-ensembles de données à l'unité de réseau au moins conjointement avec un événement qui implique une modification ou une mise à jour d'au moins un paramètre dudit sous-ensemble dans l'équipement utilisateur, et un moyen de stockage pour stocker temporairement (3 8) les sous-ensembles reçus dans l'équipement utilisateur.

9. Procédé au sein d'une unité de réseau d'un réseau de communication mobile cellulaire pour transmettre des ensembles de paramètres à un équipement utilisateur dans ledit réseau de communication, lesdits ensembles de paramètres décrivant des propriétés du réseau, ses services fournis et des appels qui appliquent lesdits services, et pour diviser l'ensemble de paramètres en au moins deux sous-ensembles de paramètres
**caractérisés par** l'étape ci-dessous consistant à :
transmettre (34, 38) l'un desdits sous-ensembles audit équipement utilisateur au moins suite à la demande de l'équipement utilisateur occasionnée par un événement qui implique une modification ou une mise à jour d'au moins un paramètre dudit sous-ensemble dans l'équipement utilisateur.

10. Procédé selon la revendication 9, par le biais duquel des sous-ensembles de paramètres sélectionnés connexes aux informations sur le réseau de communication cellulaire ou aux services délivrés dans ledit réseau sont transmis sous la forme d'ensembles normalisés et peuvent être référés au moyen d'un numéro de référence.

11. Procédé selon la revendication 10, par le biais duquel un ou plusieurs desdits ensembles normalisés est/sont transmis via le canal de diffusion des cellules du réseau de communication.

12. Unité de réseau dans un réseau de communication mobile cellulaire comprenant un ensemble de paramètres décrivant des propriétés du réseau, ses services fournis et des appels qui appliquent lesdits services, un moyen de stockage pour stocker ledit ensemble de paramètres sous la forme d'au moins deux sous-ensembles de paramètres,
**caractérisé par**
un moyen pour transmettre (34, 38) l'un desdits sous-ensembles audit équipement utilisateur au moins suite à la demande de l'équipement utilisateur occasionnée par un événement qui implique une modification ou une mise à jour d'au moins un paramètre dudit sous-ensemble dans l'équipement utilisateur.
